# EUROPÄISCHE PATENTSCHRIFT

(11) **EP 2 065 221 B1**
(45) Veröffentlichungstag und Bekanntmachung des Hinweises auf die Patenterteilung: **18.05.2011**
(21) Anmeldenummer: 08165875.9
(22) Anmeldetag: 06.10.2008
(51) Int. Cl.: C09K 5/00, B60C 1/00, C08L 9/06, C08L 9/00, C08L 15/00

(54) **Kautschukmischung und Reifen**
Rubber composition and tire
Composition de caoutchouc et pneumatique

(30) Priorität: 30.11.2007 DE 102007057793
(43) Veröffentlichungstag der Anmeldung: 03.06.2009
(73) Patentinhaber: Continental Reifen Deutschland GmbH, 30165 Hannover (DE)
(72) Erfinder: Herzog, Katharina, Dr., 31177, Harsum (DE); Recker, Carla, Dr., 30167, Hannover (DE)
(74) Vertreter: Finger, Karsten

(56) Entgegenhaltungen:
- EP-A- 0 372 798
- EP-A- 1 514 901
- EP-A- 1 535 959
- EP-A- 1 544 241
- EP-A- 1 612 241
- CA-A1- 1 083 288
- US-A1- 2007 142 550
- DATABASE WPI Week 200419 Thomson Scientific, London, GB; AN 2004-194500 XP002503755 & JP 2003 253051 A (BRIDGESTONE CORP) 10. September 2003 (2003-09-10)

## Beschreibung

Die Erfindung betrifft eine Kautschukmischung, insbesondere zur Herstellung von Reifen, die optimierte Fahreigenschaften auf winterlichen Fahrbahnen benötigen.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist eine Verbesserung des Verhaltens auf eisiger Fahrbahn, im folgenden als Eisgriff bezeichnet, üblicherweise mit einer Verschlechterung des Fahrkomforts, im folgenden als Handling bezeichnet, verbunden. An Laufstreifenmischungen für PKW- und Van-Winterreifen werden beispielsweise höchste Anforderungen hinsichtlich des Eisgriffs, des ABS-Nass- und Trockenbremsens und des Handlings gestellt, um auch bei winterlichen Straßenverhältnissen eine optimale Sicherheit für die Verkehrsteilnehmer gewährleisten zu können.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Struktur einzusetzen. Styrol-Butadien-Copolymere lassen sich modifizieren, indem z. B. Hydrierungen vorgenommen werden. Durch die Hydrierung verschlechtert sich allerdings die Kompatibilität mit den üblicherweise verwendeten Weichmachern, wie z.B. Ölen oder Flüssigpolymeren, die aus der Mischung nach einiger Zeit ausblühen und so die physikalischen Eigenschaften der Kautschukmischung unkontrolliert beeinflussen.

Zum Stand der Technik sind nun folgende Druckschriften zu würdigen:
(D1) EP 0 302 505 B1
(D2) EP 0 775 725 B1
(D3) EP 1 207 185 B1
(D4) DE 39 41 246 A1
(D5) DE 600 10 817 T2
(D6) EP 0 209 874 A1
(D7) EP 1 449 856 A1
(D8) EP 1 245 585 A2
(D9) EP 1 514 901 A1

In der D1 werden rußhaltige Kautschukmischungen für Reifen mit gutem Nassgriff und niedrigem Rollwiderstand beschrieben, die teilweise hydrierte lösungspolymerisierte Styrol-Butadien-Copolymere enthalten.

Aus der D2 ist es bekannt, Kautschukmischungen für Reifen mit gutem Nassgriff, guter Verarbeitbarkeit und geringem Rollwiderstand bereitzustellen, die partiell hydrierte Styrol-Butadien-Copolymere, Kieselsäure und Silan-Kupplungsagenzien enthalten. Die in D2 offenbarten Styrol-Butadien-Copolymere weisen bei Styrolgehalten von mehr als 37 Gew.-% nur einen Hydrierungsgrad von 25 % auf.

Die D3 beschreibt eine Kautschukmischung mit guter Griffigkeit, die durch Kompoundieren von 100 Gewichtsteilen Kautschukkomponente, umfassend 50% oder mehr eines Styrol-Butadien-Kautschuks, und 3 bis 250 Gewichtsteilen eines Copolymers von nur einem Monoolefin und einer aromatischen Vinylverbindung erhalten wird. Der Gehalt der aromatischen Vinylverbindung in dem Copolymer von nur einem Monoolefin und einer aromatischen Vinylverbindung beträgt hierbei 3 bis 80 Gew. -%.

Aus der D4 ist eine vulkanisierbare, nicht färbende Kautschukmischung bekannt, die als Weichmacher eine Kombination von Ester und Flüssigpolymer, insbesondere aus der Gruppe Polyisopren, enthält. Hier sollen die bis dato verwendeten und umweltbelastenden Aromatenöle durch genannte Weichmacherkombination ersetzt werden.

D5 offenbart eine Kautschukmischung, die eine gute Flexibilität und Scheuerbeständigkeit aufweist. Die Kautschukmischung enthält eine Kombination von cis-1,4-Polybutadien, mindestens einem flüssigen Polyalkylenpolymer mit Hydroxylendgruppe zusammen mit einem halogenierten Copolymer von Isobutylen und p-Methylstyrol, gegebenenfalls ein Elastomer auf der Basis von konjugiertem Dien, 15 bis 30 phr Ruß und 0 bis 20 phr amorphe Kieselsäure.

In der D6 wird eine thermoplastische Kautschukmischung enthaltend ein hydriertes BlockCopolymer, 10 bis 500 Gew.-% aromatenfreien Weichmacher und 5 bis 150 Gew.-% Polyolefin-Harz und / oder Polystyrol-Harz beschrieben, die sich durch gute Hochtemperatureigenschaften, mechanische Härte und Ausformungsverhalten auszeichnet.

Aus der D7 ist ein hydriertes Copolymer und eine Kautschukmischung enthaltend dieses hydrierte Copolymer bekannt. Das hydrierte Copolymer wird durch Hydrierung eines nicht hydrierten Copolymers hergestellt, wobei das hydrierte Copolymer einen Vinylanteil von 60 bis 90 Gew.-%, ein Molekulargewicht von 100 bis 1000 und einen Hydrierungsgrad von 85% oder mehr besitzt.

Ein hydriertes modifiziertes Polymer, erhalten durch Hydrierung eines modifizierten Polymers, enthaltend mindestens eine primäre Aminogruppe und / oder mindestens eine sekundäre Aminogruppe ist in D8 beschrieben. Kautschukmischungen enthaltend dieses Polymer weisen vor allem gute Hitzebeständigkeit insbesondere für die Verwendung in Elektrokabeln und Isolierbändern auf.

D9 beschreibt eine Kautschukmischung, die 100 phr eines Styrol-Butadien-Copolymers mit einem Molekulargewicht von 400.000 - 3.000.000 und einem Styrol-Gehalt von 10 - 50 % und einem Vinyl-Gehalt von 20 - 70 % enthält. Weiterhin enthält die Kautschukmischung 10 - 200 phr eines hydrierten Styrol-Butadien-Copolymers mit einem mittleren Molekulargewicht von 5.000 - 200.000 und einem Styrol-Gehalt von 25 - 70 % und einem hydrierten Anteil von > 60 % enthalten. Zusätzlich muss die in D9 beschriebene Kautschukmischung noch ein Harz oder ein Flüssig-Polymer mit einem mittleren Molekulargewicht zwischen 1.000 und 50.000 enthalten. Eine derartige Kautschukmischung soll eine reduzierte Temperaturabhängigkeit haben und sowohl die Griffeigenschaften als auch die Prozessierbarkeit verbessern.

Ausgehend von diesem Stand der Technik liegt der Erfindung die Aufgabe zugrunde, Kautschukmischungen, insbesondere für Fahrzeugluftreifen bereitzustellen, die beim Reifen eine weitere Verbesserung hinsichtlich des Konfliktes zwischen den sich gegensätzlich verhaltenden Eigenschaften Eisgriff und Handling bewirken und das Ausblühen des Weichmachers aus der Kautschukmischung verhindern.

Gelöst wird diese Aufgabe erfindungsgemäß dadurch, dass alternativ drei verschiedene Kautschukmischungen, die jeweils durch folgende Zusammensetzungen i, ii und iii gekennzeichnet sind, bereitgestellt werden:
i.
   - 30 - 80 phr zumindest eines nicht hydrierten lösungspolymerisierten Styrol-Butadien-Copolymers mit einem Styrol-Anteil von 20 bis 60 Gew.-%,
   - 10 - 60 phr zumindest eines vollständig hydrierten oder teilweise hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt,
   - 20 - 70 phr zumindest eines weiteren Dienkautschuks,
   - 5 - 300 phr sonstige Zusatzstoffe
ii.
   - 30 - 80 phr zumindest eines vollständig hydrierten oder teilweise hydrierten lösungspolymerisierten Styrol-Butadien-Copolymers mit einem Styrol-Anteil von 20 bis 60 Gew.-% und einem Hydrierungsgrad von 25 bis 100%,
   - 10 - 60 phr zumindest eines nicht hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt,
   - 20 - 70 phr zumindest eines weiteren Dienkautschuks,
   - 5 - 300 phr sonstige Zusatzstoffe.
iii.
   - 30 - 80 phr zumindest eines vollständig hydrierten oder teilweise hydrierten lösungspolymerisierten Styrol-Butadien-Copolymers mit einem Styrol-Anteil von 20 bis 60 Gew.-% und einem Hydrierungsgrad von 25 bis 100%,
   - 10 - 60 phr zumindest eines vollständig hydrierten oder teilweise hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt,
   - 20 - 70 phr zumindest eines weiteren Dienkautschuks,
   - 5 - 300 phr sonstige Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter Hydrierungsgrad eines Kautschukes ist dabei das Verhältnis der hydrierten Doppelbindungen zur den nicht hydrierten Doppelbindungen zu verstehen. Aromatische Doppelbindungen der Styrolbausteine werden dabei nicht berücksichtigt.

Überraschenderweise wurde gefunden, dass durch den Einsatz eines nicht hydrierten lösungspolymerisierten Styrol-Butadien-Copolymers mit den angegebenen Eigenschaften in Kombination mit einem hydrierten oder teilweise hydrierten Weichmacher auf Flüssigpolymerbasis mit den angegebenen Eigenschaften in Kautschukmischungen die Eigenschaften Eisgriff und Handling entkoppelt und sogar verbessert werden können. Diese Entkopplung und Verbesserung zeigt sich auch beim Einsatz eines hydrierten oder teilweise hydrierten lösungspolymerisierten Styrol-Butadien-Copolymers mit den angegebenen Eigenschaften in Kombination mit einem nicht hydrierten Weichmacher auf Flüssigpolymerbasis mit den angegebenen Eigenschaften und noch verstärkt durch den Einsatz eines hydrierten oder teilweise hydrierten lösungspolymerisierten Styrol-Butadien-Copolymers mit den angegebenen Eigenschaften in Kombination mit einem hydrierten oder teilweise hydrierten Weichmacher auf Flüssigpolymerbasis mit den angegebenen Eigenschaften.

Die erste Kautschukmischung enthält 30 - 80 phr zumindest eines nicht hydrierten lösungspolymerisierten Styrol-Butadien-Copolymers mit einem Styrol-Anteil von 20 bis 60 Gew.-% und 10 - 60 phr zumindest eines hydrierten oder teilweise hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt, während die zweite Kautschukmischung 30 - 80 phr zumindest eines hydrierten oder teilweise hydrierten lösungspolymerisierten Styrol-Butadien-Copolymers Copolymers mit einem Styrol-Anteil von 20 bis 60 Gew.-% und einem Hydrierungsgrad von 25 bis 100% und 10-60 phr zumindest eines nicht hydrierten Weichmachers auf Flüssigpolymerbasiswobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt, und die dritte Kautschukmischung 30 - 80 phr zumindest eines hydrierten oder teilweise hydrierten lösungspolymerisierten Styrol-Butadien-Copolymers mit einem Styrol-Anteil von 20 bis 60 Gew.-% und einem Hydrierungsgrad von 25 bis 100% und 10-60 phr zumindest eines hydrierten oder teilweise hydrierten Weichmachers auf Flüssigpolymerbasiswobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt, enthält.

Das hydrierte oder teilweise hydrierte lösungspolymerisierte Styrol-Butadien-Copolymer hat erfindungsgemäß einen Styrol-Anteil von 20 - 60 Gew.-% und einen Hydrierungsgrad von 25 - 100 %, die nach dem Fachmann bekannten Polymerisations- und Hydrierungsverfahren hergestellt werden können. Es können auch mehrere hydrierte oder teilweise hydrierte lösungspolymerisierten Styrol-Butadien-Copolymere im Verschnitt eingesetzt werden.

Ein besonders ausgewogenes Verhältnis von Eisgriff und Handling lässt sich erzielen, wenn das hydrierte oder teilweise hydrierte lösungspolymerisierte Styrol-Butadien-Copolymer einen Styrol-Anteil von 30 - 50 Gew.-% und einen Hydrierungsgrad von 30 - 80 % aufweist. Bei diesen Hydrierungsgraden wird auch eine besonders gute Kompatibilisierbarkeit mit eventuell verwendetem festem Polybutadien erzielt.

Das nicht hydrierte lösungspolymerisierte Styrol-Butadien-Copolymer hat erfindungsgemäß einen Styrol-Anteil von 20 - 60 Gew.-%, besonders bevorzugt hat es einen Styrol-Anteil von 30 - 50 Gew.-%.. Es können auch mehrere nicht hydrierte lösungspolymerisierten Styrol-Butadien-Copolymere im Verschnitt eingesetzt werden.

Der nicht hydrierte Weichmacher auf Flüssigpolymerbasis ist erfindungsgemäß ein flüssiger Butadien-Kautschuk und /oder ein flüssiger Styrol-Butadien-Kautschuk mit einem Molekulargewicht von 1000 - 10000 g/mol, bevorzugt 1500 - 5000 g/mol und besonders bevorzugt mit einem Molekulargewicht von 1800 - 2200 Gew.-%. Der flüssige Butadien-Kautschuk hat vorzugsweise einen Vinylanteil von 10 - 90 Gew.-% und einen Trans-Anteil von 10 - 90 Gew.-% und der flüssige Styrol-Butadien-Kautschuk vorzugsweise einen Styrol-Anteil von 0 - 50 Gew. -% Es können jeweils auch Cis-Anteile vorhanden sein. Es können auch mehrere nicht hydrierte Weichmacher auf Flüssigpolymerbasis im Verschnitt eingesetzt werden.

Ebenso handelt es sich bei dem hydrierten oder teilweise hydrierten Weichmacher auf Flüssigpolymerbasis um einen flüssigen Butadien-Kautschuk und /oder um einen flüssigen Styrol-Butadien-Kautschuk, mit einem Styrolgehalt zwischen 0-50 Gew.-%, wobei das Molekulargewicht erfindungsgemäß jeweils 1000 - 10000 Gew.-%, bevorzugt 1500 - 5000 g/mol und besonders bevorzugt 1800 - 2200 Gew.-% beträgt.

Der Hydrierungsgrad des hydrierten oder teilweise hydrierten Weichmachers auf Flüssigpolymerbasis beträgt bevorzugt 10 - 100 % und besonders bevorzugt 50 - 100 %.

Es können auch mehrere hydrierte oder teilweise hydrierte Weichmacher auf Flüssigpolymerbasis im Verschnitt eingesetzt werden.

Die erfindungsgemäße Kautschukmischung enthält weiterhin 20 - 70 phr zumindest eines weiteren Dienkautschuks. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus natürlichem Polyisopren (NR), synthetischem Polyisopren (IR), Polybutadien (BR) und weiteren Styrol-Butadien-Copolymeren (SBR). Diese Dienelastomere lassen sich gut zu der Kautschukmischung verarbeiten und ergeben in den vulkanisierten Reifen gute Reifeneigenschaften.

Die Kautschukmischung kann als Dienkautschuk 10 - 50 phr Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%. Vorzugsweise enthält die Kautschukmischung 10 bis 50 phr Naturkautschuk.

Enthält die Kautschukmischung als einen Dienkautschuk 20 - 70 phr festes Polybutadien (BR), handelt es sich bevorzugt um cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann. Die Verblendung von Kautschukmischungen mit cis-Polybutadien wird durchgeführt, um die Glasübergangstemperatur der Mischung zu senken und dadurch die Wintereigenschaften (Eis- und Schneegriff) des Reifens zusätzlich zu verbessern. Es kann beispielsweise aber auch ein festes Polybutadien mit einem Vinyl-Anteil zwischen 10 - 70% verwendet werden.

Neben den genannten Dienkautschuken kann die Mischung aber auch noch andere Kautschuktypen, wie z. B. Styrol-Isopren-Butadien-Terpolymer und / oder Butylkautschuk und / oder Halobutylkautschuk und / oder Ethylen-Propylen-Dien-Kautschuk (EPDM), enthalten.

Bei den weiteren Styrol-Butadien-Copolymeren handelt es sich um solche, die nicht unter die teilweise hydrierten lösungspolymerisierten Typen gemäß einem der Ansprüche 1 bis 3 fallen. Es kann sich z. B. um lösungspolymerisierte Styrol-Butadien-Copolymere mit geringerem Styrol-Anteil oder geringerem Hydrierungsgrad handeln. Die SSBR können auch gekoppelt, z. B. mit Zinn, sein. Es können aber auch emulsionspolymerisiertes Styrol-Butadien-Copolymer (ESBR) sowie Mischungen aus ESBR und SSBR eingesetzt werden. Der Styrolgehalt des ESBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Sonstige Zusatzstoffe beinhaltet im Wesentlichen die Gesamtmenge an Füllstoffen, wie z.B. Ruß und / oder Kieselsäure angebunden durch Silan-Kupplungsagenzien, Vernetzungssystem (Vernetzer und Beschleuniger), Weichmacher, Wachse, Alterungsschutzmittel, Mastikationshilfsmittel und Aktivatoren.

Der Mengenanteil der Gesamtmenge an Zusatzstoffen beträgt 5 bis 300 phr, bevorzugt 20 bis 200 phr.

Im Gesamtmengenanteil an Zusatzstoffen enthält die erfindungsgemäße Kautschukmischung 20 bis 120 phr, bevorzugt 10 bis 100 phr, zumindest einer Kieselsäure und 1 bis 15 phr zumindest eines Silan-Kupplungsagenzes. Es können dabei alle dem Fachmann für die Reifenindustrie bekannten Kieselsäuren eingesetzt werden. Die Kautschukmischung kann neben Kieselsäure auch noch weitere Füllstoffe wie Aluminiumhydroxid, Schichtsilikate, Kreide, Stärke, Magnesiumoxid, Titandioxid, Kautschukgele, Kurzfasern usw. in beliebigen Kombinationen enthalten. Vorzugsweise enthält sie jedoch 0 bis 60 phr, besonders bevorzugt 5 bis 50 phr Ruß.

Die Silan-Kupplungsagenzien dienen gleichzeitig zur Verbesserung der Verarbeitbarkeit und zur Anbindung der Kieselsäure und anderer ggf. vorhandener polarer Füllstoffe an den Dienkautschuk und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden.

Die Vulkanisation wird bevorzugt in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr Schwefel, bevorzugt in Mengen von 1,5 bis 2,8 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren in den üblichen Mengen enthalten, die erfindungsgemäß in den obig beschriebenen Zusatzstoffen enthaltend sind.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht. Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in den Tabellen 1a,1b und 2a, 2b zusammengefasst sind, näher erläutert werden.

Bei sämtlichen in den Tabellela und 2a enthaltenen Mischungsbeispielen sind die angegebenen Mengenangaben Gewichtsteile, die auf 100 Gewichtsteile Gesamtkautschuk bezogen sind. Die Vergleichsmischung ist mit V1 gekennzeichnet, die erfindungsgemäßen Mischungen sind mit E gekennzeichnet. Die Mischungen E3 bzw. E4 und E5 bzw. E6 unterscheiden sich lediglich in dem Hydrierungsgrad des eingesetzten lösungspolymerisierten Styrol-Butadien-Copolymers.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt, die in Tabellen 1b und 2b dargestellt sind. Für die Tests an Prüfkörpern wurden folgende Testverfahren angewandt:
- Shore-A-Härte bei Raumtemperatur und 70 °C gemäß DIN 53 505
- Rückprallelastizität bei Raumtemperatur und 70 °C gemäß DIN 53 512
- Zugfestigkeit bei Raumtemperatur gemäß DIN 53 504
- Reißdehnung bei Raumtemperatur gemäß DIN 53 504
- Spannungswerte bei 100% und 300% statischer Dehnung bei Raumtemperatur gemäß DIN 53 504
- mittlerer dynamischer Speichermodul E' zwischen -25 und -5 °C gemäß DIN 53 513 aus Messung mit Variation der Temperatur bei dynamischer Verformungsamplitude von 0,2 % bei 10 % Vorverformung und 10 Hz

**Tabelle 1a**

| **Bestandteile** | **Einheit** | **V1** | **E2** | **E3** | **E4** |
|---|---|---|---|---|---|
| cis-Polyisopren | phr | 20 | 20 | 20 | 20 |
| cis-Polybutadien | phr | 26,67 | 26,67 | 26,67 | 26,67 |
| S-SBR Typ A^{a} | phr | 53,33 | 53,33 | - | - |
| S-SBR Typ B^{b} | phr | - | - | 53,33 | 53,33 |
| S-SBR Typ C^{c} | phr | - | - | - | - |
| Kieselsäure^{d} | phr | 95 | 95 | 95 | 95 |
| Silan^{e} | phr | 6,65 | 6,65 | 6,65 | 6,65 |
| Weichmacher konventionell | phr | 18,33 | 18,33 | 18,33 | 18,33 |
| Flüssigpolymer^{f} | phr | 26,67 | - | 26,67 | - |
| Hydriertes Flüssigpolymer^{g} | phr | - | 26,67 | - | 26,67 |
| Alterungs-schutzmittel | phr | 4 | 4 | 4 | 4 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Beschleuniger | phr | 4,03 | 3,6 | 4,03 | 3,6 |
| Schwefel | phr | 2,53 | 2 | 2,53 | 2 |

| | | | | | |
|---|---|---|---|---|---|
| ^{a}lösungspolymerisiertes Styrol-Butadien-Copolymer, Styrol-Anteil: 38 Gew.%, Hydrierungsgrad: 0 % ^{b}teilweise hydriertes lösungspolymerisiertes Styrol-Butadien-Copolymer, Styrol-Anteil: 40 Gew.%, Hydrierungsgrad: 40 % ^{c}teilweise hydriertes lösungspolymerisiertes Styrol-Butadien-Copolymer, Styrol-Anteil: 40 Gew.%, Hydrierungsgrad: 70 % ^{d}VN3, Degussa AG, Deutschland, Stickstoff-Oberfläche: 175 m²/g, CTAB-Oberfläche: 160 m²/g ^{e}Silquest^{®} A 1589, General Electric Speciality, USA ^{f}Polybutadien Liq., Nisso Chemicals Europe GmbH, PB B-2000, Molekulargewicht: 1800-220 g/mol, vinyl-Anteil >90 Gew.-%, trans-Anteil <10 Gew.-% ^{g}Hydriertes Polybutadien liq., Nisso Chemicals Europe GmbH, PB BI-2000, Molekulargewicht ca. 2100 g/mol | | | | | |

**Tabelle 1b**

| **Eigenschaften** | **Einheit** | **V1** | **E2** | **E3** | **E4** |
|---|---|---|---|---|---|
| Härte bei RT | Shore A | 65,3 | 65,9 | 62,7 | 64,4 |
| Härte bei 70 °C | Shore A | 63,4 | 61,1 | 59,5 | 60,8 |
| Rüpra. bei RT | % | 19 | 18,3 | 19,4 | 18,5 |
| Rüpra. bei 70 °C | % | 42 | 32,3 | 41,4 | 32,3 |
| Zugfestigkeit bei RT | MPa | 14,5 | 10,8 | 13,7 | 11,5 |
| Reißdehnung bei RT | % | 616 | 512 | 656 | 538 |
| Spannungswert 100% | MPa | 1,89 | 1,76 | 1,64 | 1,79 |
| Spannungswert 300% | MPa | 6,39 | 6,02 | 5,59 | 6,19 |
| E' (-25°C bis -5°C) | MPa | 159 | 134 | 91 | 59 |

**Tabelle 2a**

| **Bestandteile** | **Einheit** | **V1** | **E2** | **E5** | **E6** |
|---|---|---|---|---|---|
| cis-Polyisopren | phr | 20 | 20 | 20 | 20 |
| cis-Polybutadien | phr | 26,67 | 26,67 | 26,67 | 26,67 |
| S-SBR Typ A^{a} | phr | 53,33 | 53,33 | - | - |
| S-SBR Typ B^{b} | phr | - | - | - | - |
| S-SBR Typ C^{c} | phr | - | - | 53,33 | 53,33 |
| Kieselsäure^{d} | phr | 95 | 95 | 95 | 95 |
| Silan^{e} | phr | 6,65 | 6,65 | 6,65 | 6,65 |
| Weichmacher konventionell | phr | 18,33 | 18,33 | 18,33 | 18,33 |
| Flüssigpolymer^{f} | phr | 26,67 | - | 26,67 | - |
| Hydriertes Flüssigpolymer^{g}, | phr | - | 26,67 | | 26,67 |
| Alterungs-schutzmittel | phr | 4 | 4 | 4 | 4 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| Beschleuniger | phr | 4,03 | 3,6 | 4,03 | 3,6 |
| Schwefel | phr | 2,53 | 2 | 2,53 | 2 |

| | | | | | |
|---|---|---|---|---|---|
| ^{a}lösungspolymerisiertes Styrol-Butadien-Copolymer, Styrol-Anteil: 38 Gew.-%, Hydrierungsgrad: 0 % ^{b}teilweise hydriertes lösungspolymerisiertes Styrol-Butadien-Copolymer, Styrol-Anteil: 40 Gew.-%, Hydrierungsgrad: 40 % ^{c}teilweise hydriertes lösungspolymerisiertes Styrol-Butadien-Copolymer, Styrol-Anteil: 40 Gew.-%, Hydrierungsgrad: 70 % ^{d}VN3, Degussa AG, Deutschland, Stickstoff-Oberfläche: 175 m²/g, CTAB-Oberfläche: 160 m²/g ^{e}Silquest^{®} A 1589, General Electric Speciality, USA ^{f}Polybutadien Liq., Nisso Chemicals Europe GmbH, PB B-2000, Molekulargewicht: 1800-220 g/mol, vinyl-Anteil >90 Gew.%, trans-Anteil <10 Gew.-% ^{g}Hydriertes Polybutadien liq., Nisso Chemicals Europe GmbH, PB BI-2000, Molekulargewicht ca. 2100 g/mol | | | | | |

**Tabelle 2b**

| **Eigenschaften** | **Einheit** | **V1** | **E2** | **E5** | **E6** |
|---|---|---|---|---|---|
| Härte bei RT | Shore A | 65,3 | 65,9 | 65,2 | 66,7 |
| Härte bei 70 °C | Shore A | 63,4 | 61,1 | 61 | 62,4₁₀ |
| Rüpra. bei RT | % | 19 | 18,3 | 21,9 | 22,8 |
| Rüpra. bei 70 °C | % | 42 | 32,3 | 41,7 | 34,3 |
| Zugfestigkeit bei RT | MPa | 14,5 | 10,8 | 11,9 | 11,3 |
| Reißdehnung bei RT | % | 616 | 512 | 724 | 589₁₅ |
| Spannungswert 100% | MPa | 1,89 | 1,76 | 1,64 | 1,88 |
| Spannungswert 300 % | MPa | 6,39 | 6,02 | 4,55 | 5,61 |
| E' (-25°C bis -5°C) | MPa | 159 | 134 | 106 | 78 |

Aus den Daten der Tabellen 1a,1 b und 2a, 2b wird ersichtlich, dass Eisgriff und Handling schon bei Verwendung von nicht hydriertem SSBR mit hydriertem oder teilweise hydriertem Weichmacher auf Flüssigpolymerbasis, aber insbesondere durch die erfindungsgemäße Kombination von hydriertem oder teilweise hydriertem SSBR mit hydriertem oder teilweise hydriertem Weichmacher auf Flüssigpolymerbasis voneinander entkoppelt und verbessert werden können.

Als Indikator für die Verbesserung des Eisgriffes kann der Speichermodul E' zwischen - 25°C und -5°C angesehen werden, wobei ein verringerter Speichermodul mit der Verbesserung des Eisgriffs gleichzusetzen ist.

Durch die Kombination der Eigenschaften Rückprallelastizität bei 70°C und Spannungswert bei 100% Dehnung wird das Handling abgebildet. Dabei dient die Rückprallelastizität bei 70°C als Indikator für die Griffigkeit beim Fahrkomfort, wobei niedrige Werte bessere Griffigkeit bedeutet, und der Spannungswert bei 100% Dehnung ist ein Maß für die Steifigkeit beim Handling, wobei höhere Werte bessere Steifigkeit bedeutet. Optimal ist folglich ein niedriger Wert für die Rückprallelastizität bei 70°C und ein hoher Spannungswert bei 100% Dehung.

Aus den Tabellen 1a, 1b und 2a, 2b ist zu erkennen, dass sich die ShoreA-Härten für alle Mischungsbeispiele sowohl bei Raumtemperatur als auch bei 70°C auf ähnlichem Niveau befinden. Der Eisgriff verbessert sich um Faktor 2,0 bis 2,7 bei der erfindungsgemäßen Verwendung von hydriertem oder teilweise hydriertem SSBR und hydriertem oder teilweise hydriertem Weichmacher auf Flüssigpolymerbasis (Mischungen E4 und E6) im Vergleich zur Vergleichsmischung V1. Gleichzeitig sind in diesen Mischungen (E4 und E6) die oben beschriebenen Indikatoren für Handling deutlich verbessert.

## Patentansprüche

1. Kautschukmischung, **gekennzeichnet durch** folgende Zusammensetzung:
- 30 - 80 phr zumindest eines nicht hydrierten lösungspolymerisierten Styrol-Butadien-Copolymers mit einem Styrol-Anteil von 20 bis 60 Gew.-%,
- 10 - 60 phr zumindest eines vollständig hydrierten oder teilweise hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt,
- 20 - 70 phr zumindest eines weiteren Dienkautschuks,
- 5 - 300 phr sonstige Zusatzstoffe.

2. Kautschukmischung, **gekennzeichnet durch** folgende Zusammensetzung:
- 30 - 80 phr zumindest eines vollständig hydrierten oder teilweise hydrierten lösungspolymerisierten Styrol-Butadien-Copolymers mit einem Styrol-Anteil von 20 bis 60 Gew.-% und einem Hydrierungsgrad von 25 bis 100%,
- 10 - 60 phr zumindest eines nicht hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt,
- 20 - 70 phr zumindest eines weiteren Dienkautschuks,
- 5 - 300 phr sonstige Zusatzstoffe.

3. Kautschukmischung, **gekennzeichnet durch** folgende Zusammensetzung:
- 30 - 80 phr zumindest eines vollständig hydrierten oder teilweise hydrierten lösungspolymerisierten Styrol-Butadien-Copolymers mit einem Styrol-Anteil von 20 bis 60 Gew.-% und einem Hydrierungsgrad von 25 bis 100%,
- 10 - 60 phr zumindest eines vollständig hydrierten oder teilweise hydrierten Weichmachers auf Flüssigpolymerbasis, wobei es sich um einen flüssigen Butadien-Kautschuk mit einem Molekulargewicht von 1000 bis 10000 g/mol und /oder um einen flüssigen Styrol-Butadien-Kautschuk mit einem Molekulargewicht von 1000 bis 10000 g/mol handelt,
- 20 - 70 phr zumindest eines weiteren Dienkautschuks,
- 5 - 300 phr sonstige Zusatzstoffe.

4. Kautschukmischung nach Anspruch 2, **dadurch gekennzeichnet, dass** der nicht hydrierte Weichmacher auf Flüssigpolymerbasis ein flüssiger Butadien-Kautschuk mit einem Vinylanteil von 10 bis 90 Gew. -% ist.

5. Kautschukmischung nach Anspruch 2, **dadurch gekennzeichnet, dass** der nicht hydrierte Weichmacher auf Flüssigpolymerbasis ein flüssiger Butadien-Kautschuk mit einem Trans-Anteil von 10 bis 90 Gew.-% ist.

6. Kautschukmischung nach Anspruch 2, Ansprüche, **dadurch gekennzeichnet, dass** der nicht hydrierte Weichmacher auf Flüssigpolymerbasis ein flüssiger Styrol-Butadien-Kautschuk mit einem Styrol-Anteil von 0 bis 50 Gew.-% ist.

7. Kautschukmischung nach einem der Ansprüche 1 bis 6, **dadurch gekennzeichnet, dass** diese 20 bis 70 phr zumindest einen weiteren Dienkautschuk enthält, der ausgewählt ist aus der Gruppe, bestehend aus natürlichem Polyisopren und / oder synthetischem Polyisopren und / oder Halobutylkautschuk und /oder Polybutadien und / oder anderen Styrol-Butadien-Copolymeren.

8. Kautschukmischung nach Anspruch 7, **dadurch gekennzeichnet, dass** diese 10 - 50 phr natürliches Polyisopren (NR) und / oder synthetisches Polyisopren (IR) enthält.

9. Kautschukmischung nach Anspruch 8, **dadurch gekennzeichnet, dass** das Polyisopren ein cis-Polyisopren ist.

10. Kautschukmischung nach Anspruch 7, **dadurch gekennzeichnet, dass** diese 20 - 70 phr Polybutadien enthält.

11. Kautschukmischung nach Anspruch 10, **dadurch gekennzeichnet, dass** das Polybutadien ein cis-Polybutadien ist.

12. Kautschukmischung nach einem der Ansprüche 1 bis 11, **dadurch gekennzeichnet, dass** der Mengenanteil der Zusatzstoffe 20 bis 200 phr beträgt.

13. Kautschukmischung nach einem der Ansprüche 1 bis 12, **dadurch gekennzeichnet, dass** im Gesamtmengenanteil der Zusatzstoffe 20 bis 120 phr zumindest einer Kieselsäure enthalten sind.

14. Kautschukmischung nach einem der Ansprüche 1 bis 13, **dadurch gekennzeichnet, dass** im Gesamtmengenanteil der Zusatzstoffe 1 bis 15 phr zumindest eines Silan-Kupplungsagenzes enthalten sind.

15. Kautschukmischung nach einem der Ansprüche 1 bis 14, **dadurch gekennzeichnet, dass** im Gesamtmengenanteil der Zusatzstoffe 0 bis 60 phr Ruß enthalten ist.

16. Verwendung einer Kautschukmischung nach einem der Ansprüche 1 bis 15 zur Herstellung eines Reifens, insbesondere eines Fahrzeugluftreifens.

17. Verwendung einer Kautschukmischung nach Anspruch 16 zur Herstellung des Laufstreifens eines Reifens.

## Claims

1. Rubber mixture, **characterized by** the following constitution:
- from 30 to 80 phr of at least one non-hydrogenated solution-polymerized styrene-butadiene copolymer having from 20 to 60% by weight styrene content,
- from 10 to 60 phr of at least one completely hydrogenated or partially hydrogenated plasticizer based on liquid polymer, where this involves a liquid butadiene rubber with a molar mass of from 1000 to 10 000 g/mol and/or a liquid styrene-butadiene rubber with a molar mass of from 1000 to 10 000 g/mol,
- from 20 to 70 phr of at least one further diene rubber,
- from 5 to 300 phr of other additives.

2. Rubber mixture, **characterized by** the following constitution:
- from 30 to 80 phr of at least one completely hydrogenated or partially hydrogenated solution-polymerized styrene-butadiene copolymer having from 20 to 60% by weight styrene content and a degree of hydrogenation of from 25 to 100%,
- from 10 to 60 phr of non-hydrogenated plasticizer based on liquid polymer, where this involves a liquid butadiene rubber with a molar mass of from 1000 to 10 000 g/mol and/or a liquid styrene-butadiene rubber with a molar mass of from 1000 to 10 000 g/mol,
- from 20 to 70 phr of at least one further diene rubber,
- from 5 to 300 phr of other additives.

3. Rubber mixture, **characterized by** the following constitution:
- from 30 to 80 phr of at least one completely hydrogenated or partially hydrogenated solution-polymerized styrene-butadiene copolymer having from 20 to 60% by weight styrene content and a degree of hydrogenation of from 25 to 100%,
- from 10 to 60 phr of at least one completely hydrogenated or partially hydrogenated plasticizer based on liquid polymer, where this involves a liquid butadiene rubber with a molar mass of from 1000 to 10 000 g/mol and/or a liquid styrene-butadiene rubber with a molar mass of from 1000 to 10 000 g/mol,
- from 20 to 70 phr of at least one further diene rubber,
- from 5 to 300 phr of other additives.

4. Rubber mixture according to Claim 2, **characterized in that** the non-hydrogenated plasticizer based on liquid polymer is a liquid butadiene rubber having from 10 to 90% by weight vinyl content.

5. Rubber mixture according to Claim 2, **characterized in that** the non-hydrogenated plasticizer based on liquid polymer is a liquid butadiene rubber having from 10 to 90% by weight trans content.

6. Rubber mixture according to Claim 2, **characterized in that** the non-hydrogenated plasticizer based on liquid polymer is a liquid styrene-butadiene rubber having from 0 to 50% by weight styrene content.

7. Rubber mixture according to any of Claims 1 to 6, **characterized in that** this comprises from 20 to 70 phr of at least one further diene rubber which has been selected from the group consisting of natural polyisoprene and/or synthetic polyisoprene and/or halobutyl rubber and/or polybutadiene and/or other styrene-butadiene copolymers.

8. Rubber mixture according to Claim 7, **characterized in that** this comprises from 10 to 50 phr of natural polyisoprene (NR) and/or synthetic polyisoprene (IR).

9. Rubber mixture according to Claim 8, **characterized in that** the polyisoprene is a cis-polyisoprene.

10. Rubber mixture according to Claim 7, **characterized in that** this comprises from 20 to 70 phr of polybutadiene.

11. Rubber mixture according to Claim 10, **characterized in that** the polybutadiene is a cis-polybutadiene.

12. Rubber mixture according to any of Claims 1 to 11, **characterized in that** the quantitative proportion of the additives is from 20 to 200 phr.

13. Rubber mixture according to any of Claims 1 to 12, **characterized in that**, within the total quantitative proportion of the additives, from 20 to 120 phr of at least one silica are present.

14. Rubber mixture according to any of Claims 1 to 13, **characterized in that**, within the total quantitative proportion of the additives, from 1 to 15 phr of at least one silane coupling agent are present.

15. Rubber mixture according to any of Claims 1 to 14, **characterized in that**, within the total quantitative proportion of the additives, from 0 to 60 phr of carbon black.

16. The use of a rubber mixture according to any of Claims 1 to 15 for producing a tyre, in particular a pneumatic tyre.

17. Use of a rubber mixture according to Claim 16 for producing the tread of tyre.

## Revendications

1. Mélange de caoutchouc, **caractérisé par** la composition suivante :
- 30 à 80 phr d'au moins un copolymère styrène-butadiène polymérisé en solution non hydrogéné ayant une proportion de styrène de 20 à 60 % en poids,
- 10 à 60 phr d'au moins un plastifiant complètement hydrogéné ou partiellement hydrogéné à base d'un polymère liquide, celui-ci étant un caoutchouc de butadiène liquide d'un poids moléculaire de 1 000 à 10 000 g/mol et/ou un caoutchouc de styrène-butadiène liquide d'un poids moléculaire de 1 000 à 10 000 g/mol,
- 20 à 70 phr d'au moins un caoutchouc diène supplémentaire,
- 5 à 300 phr d'autres additifs.

2. Mélange de caoutchouc, **caractérisé par** la composition suivante :
- 30 à 80 phr d'au moins un copolymère styrène-butadiène polymérisé en solution complètement hydrogéné ou partiellement hydrogéné ayant une proportion de styrène de 20 à 60 % en poids et un degré d'hydrogénation de 25 à 100 %,
- 10 à 60 phr d'au moins un plastifiant non hydrogéné à base d'un polymère liquide, celui-ci étant un caoutchouc de butadiène liquide d'un poids moléculaire de 1 000 à 10 000 g/mol et/ou un caoutchouc de styrène-butadiène liquide d'un poids moléculaire de 1 000 à 10 000 g/mol,
- 20 à 70 phr d'au moins un caoutchouc diène supplémentaire,
- 5 à 300 phr d'autres additifs.

3. Mélange de caoutchouc, **caractérisé par** la composition suivante :
- 30 à 80 phr d'au moins un copolymère styrène-butadiène polymérisé en solution complètement hydrogéné ou partiellement hydrogéné ayant une proportion de styrène de 20 à 60 % en poids et un degré d'hydrogénation de 25 à 100 %,
- 10 à 60 phr d'au moins un plastifiant complètement hydrogéné ou partiellement hydrogéné à base d'un polymère liquide, celui-ci étant un caoutchouc de butadiène liquide d'un poids moléculaire de 1 000 à 10 000 g/mol et/ou un caoutchouc de styrène-butadiène liquide d'un poids moléculaire de 1 000 à 10 000 g/mol,
- 20 à 70 phr d'au moins un caoutchouc diène supplémentaire,
- 5 à 300 phr d'autres additifs.

4. Mélange de caoutchouc selon la revendication 2, **caractérisé en ce que** le plastifiant non hydrogéné à base d'un polymère liquide est un caoutchouc de butadiène liquide ayant une proportion de vinyle de 10 à 90 % en poids.

5. Mélange de caoutchouc selon la revendication 2, **caractérisé en ce que** le plastifiant non hydrogéné à base d'un polymère liquide est un caoutchouc de butadiène liquide ayant une proportion de trans de 10 à 90 % en poids.

6. Mélange de caoutchouc selon la revendication 2, **caractérisé en ce que** le plastifiant non hydrogéné à base d'un polymère liquide est un caoutchouc de styrène-butadiène liquide ayant une proportion de styrène de 0 à 50 % en poids.

7. Mélange de caoutchouc selon l'une quelconque des revendications 1 à 6, **caractérisé en ce que** celui-ci contient 20 à 70 phr d'au moins un caoutchouc diène supplémentaire, qui est choisi dans le groupe constitué par le polyisoprène naturel et/ou le polyisoprène synthétique et/ou le caoutchouc d'halogénobutyle et/ou le polybutadiène et/ou d'autres copolymères styrène-butadiène.

8. Mélange de caoutchouc selon la revendication 7, **caractérisé en ce que** celui-ci contient 10 à 50 phr de polyisoprène naturel (NR) et/ou de polyisoprène synthétique (IR).

9. Mélange de caoutchouc selon la revendication 8, **caractérisé en ce que** le polyisoprène est un cis-polyisoprène.

10. Mélange de caoutchouc selon la revendication 7, **caractérisé en ce que** celui-ci contient 20 à 70 phr de polybutadiène.

11. Mélange de caoutchouc selon la revendication 10, **caractérisé en ce que** le polybutadiène est un cis-polybutadiène.

12. Mélange de caoutchouc selon l'une quelconque des revendications 1 à 11, **caractérisé en ce que** la proportion des additifs est de 20 à 200 phr.

13. Mélange de caoutchouc selon l'une quelconque des revendications 1 à 12, **caractérisé en ce que** 20 à 120 phr d'au moins une silice sont contenus dans la proportion totale des additifs.

14. Mélange de caoutchouc selon l'une quelconque des revendications 1 à 13, **caractérisé en ce que** 1 à 15 phr d'au moins un agent de couplage silane sont contenus dans la proportion totale des additifs.

15. Mélange de caoutchouc selon l'une quelconque des revendications 1 à 14, **caractérisé en ce que** 0 à 60 phr de suie sont contenus dans la proportion totale des additifs.

16. Utilisation d'un mélange de caoutchouc selon l'une quelconque des revendications 1 à 15 pour la fabrication d'un pneu, notamment d'un pneu pour automobile.

17. Utilisation d'un mélange de caoutchouc selon la revendication 16 pour la fabrication de la bande de roulement d'un pneu.
